# EUROPEAN PATENT SPECIFICATION

(11) **EP 1 129 501 B1**
(45) Date of publication and mention of the grant of the patent: **28.12.2005**
(21) Application number: 99947678.1
(22) Date of filing: 27.09.1999
(51) Int. Cl.: H01M 8/02

(54) **BIPOLAR PLATE FOR FUEL CELLS**
BIPOLARE PLATTE FÜR BRENNSTOFFZELLEN
PLAQUE BIPOLAIRE POUR PILES A COMBUSTIBLE

(30) Priority: 08.10.1998 GB 9821856
(43) Date of publication of application: 05.09.2001
(73) Proprietor: Ineos Chlor Enterprises Limited, Runcorn Cheshire WA7 4JE (GB)
(72) Inventor: MAY, Barrett, Cheshire CW8 4TF (GB); HODGSON, David, Ronald, Bolton BL5 2RU (GB)
(74) Representative: Collingwood, Anthony Robert
(86) International application number: PCT/GB1999/003206
(87) International publication number: WO 2000/022689

(56) References cited:
- EP-A- 0 410 166
- DE-A- 19 523 637
- DE-C- 19 805 674
- US-A- 3 134 696
- US-A- 3 589 942
- US-A- 4 214 969
- US-A- 5 912 088
- DATABASE WPI Section Ch, Week 199748 Derwent Publications Ltd., London, GB; Class L03, AN 1997-518624 XP002131293 -& JP 09 245819 A (TANAKA KIKINZOKU KOGYO KK), 19 September 1997 (1997-09-19) -& US 5 846 668 A (MASAHIRO WANATABE) 8 December 1998 (1998-12-08)
- PATENT ABSTRACTS OF JAPAN vol. 1999, no. 10, 31 August 1999 (1999-08-31) & JP 11 126620 A (TOYOTA CENTRAL RES &DEV LAB INC), 11 May 1999 (1999-05-11) -& DATABASE WPI Derwent Publications Ltd., London, GB; AN 1999-343546 XP002131294 -& CHEMICAL ABSTRACTS, vol. 130, no. 23, 7 June 1999 (1999-06-07) Columbus, Ohio, US; abstract no. 314413, NONOYAMA: "Separator for solid-state fuel cells" XP002131289 & JP 11 126620 A (TOYOTA CENTRAL RESEARCH AND DEVELOPMENT LABORATORIES) 11 May 1999 (1999-05-11)
- CHEMICAL ABSTRACTS, vol. 126, no. 19, 12 May 1997 (1997-05-12) Columbus, Ohio, US; abstract no. 253329, KEYZER ET AL: "A search for suitable coating materials on separator plates for molten carbonate fuel cells" XP002131290 & CORROS. SCI., vol. 39, no. 3, 1997, pages 483-494, XP002131298
- PATENT ABSTRACTS OF JAPAN vol. 1999, no. 11, 30 September 1999 (1999-09-30) & JP 11 162478 A (AISIN SEIKI CO LTD), 18 June 1999 (1999-06-18) -& CHEMICAL ABSTRACTS, vol. 131, no. 2, 12 July 1999 (1999-07-12) Columbus, Ohio, US; abstract no. 21315, KUWARA ET AL: "Separators for solid electrolyte fuel cells" XP002131291 -& DATABASE WPI Derwent Publications Ltd., London, GB; AN 1999-409991 XP002131295
- CHEMICAL ABSTRACTS, vol. 124, no. 24, 10 June 1996 (1996-06-10) Columbus, Ohio, US; abstract no. 321562, KANEKO ET AL: "Solid-oxide fuel cells" XP002131292 & JP 08 045530 A (HIROMASA KANEKO) 16 February 1996 (1996-02-16) -& PATENT ABSTRACTS OF JAPAN vol. 1996, no. 6, 28 June 1996 (1996-06-28) & JP 08 045530 A (HIROMASA KANEKO), 16 February 1996 (1996-02-16)

## Description

The present invention relates to bipolar plates for fuel cells, to fuel cells comprising such plates and particularly to so-called proton-exchange membrane fuel cells.

A fuel cell is an electrochemical device in which electricity is produced without combustion of fossil fuel. In a fuel cell, a fuel, which is typically hydrogen, is oxidised at a fuel electrode, (anode) and oxygen, typically from air, is reduced at a cathode, to produce an electric current and form by-product water. An electrolyte is required which is in contact with both electrodes and which may be alkaline or acidic, liquid or solid.

Heat and water are the only by-products of the electrochemical reaction in fuel cells wherein the fuel is hydrogen. Accordingly, the use of such cells in power generation offers potential environmental benefits compared with power generation from combustion of fossil fuels or by nuclear activity.

In proton-exchange membrane fuel cells, hereinafter referred to for convenience as "PEM" fuel cells, the electrolyte is a solid polymer membrane which allows transport of protons from the anode to the cathode and is typically based on perfluorosulphonic acid materials. The electrolyte must be maintained in a hydrated form during operation in order to prevent loss of ionic conduction through the electrolyte.

A PEM fuel cell typically comprises two electrodes, an anode and a cathode, separated by a proton-exchange membrane electrolyte. At the anode, hydrogen fuel catalytically dissociates into free electrons and protons. The free electrons are conducted in the form of usable electric current through the external circuit with which the fuel cell is in electrical contact. The protons migrate through the membrane electrolyte to the cathode where they combine with oxygen from the air and electrons from the external circuit to form water and generate heat. Individual fuel cells may be combined into assemblies, which are often referred to in the art as stacks, to provide the amount of power required.

A PEM fuel cell assembly comprises a plurality of such individual cells. In a fuel cell assembly bipolar plates, also known as fluid flow field plates, play a significant role. The bipolar plate is fabricated with surface features, for example a series of corrugations or a serpentine pattern, which provide gas flow channels which ensure essentially even distribution of input gases over the electrode surfaces. The bipolar plate should have high electrical conductivity as an ohmic loss in the plate will reduce the overall assembly efficiency.

Bipolar plates for fuel cells constructed from metals, referred to therein as bipolar terminal grids, have been described by Douglas et al in US 3,134,696. Bipolar plates for fuel cells constructed from carbon/polymer composites, referred to therein as bipolar current collectors-separators, have been described by Lawrence in US 4,214,969. Bipolar plates for fuel cells constructed from graphite, referred to therein as fluid flow field plates, have been described by Wilkinson et al in WO 95/16287.

We have now found that the electrical conductivity of bipolar plates for fuel cells can be increased by coating them with a coating of an electrocatalytically-active material. By "electrocatalytically-active material" we mean a material which where used as an electrode or coating therefor catalyses electrochemical reactions at high current densities at potentials close to the equilibrium potential as is more fully described by R Greef et al in "Instrumental Methods in Electrochemistry", Ellis Horwood, 1990 and by D Pletcher et al in "Industrial Electrochemistry", Chapman and Hall, 1990.

According to the first aspect of the present invention there is provided a bipolar plate for fuel cells for (a) conducting current from the anode of one cell unit to the cathode of the adjacent cell unit and/or (b) distributing fluid, the plate comprising a substrate with a coating of an electrocatalytically-active material comprising ruthenium oxide.

The bipolar plate according to the present invention is provided with surface features, for example an in-plane non-uniform structure, which may be regular or irregular, e.g. a series of corrugations or serpentine pattern, which provide gas flow channels which ensure essentially even distribution of fuel, e.g. input gases, over the electrode surfaces and facilitate transport of by-products, e.g. water, therefrom.

Such surface features may be formed by techniques well known to those skilled in the art, for example embossing or die-casting.

According to a further aspect of the present invention there is provided a fuel cell assembly in accordance with Claims 19, 20 and 21 appended hereto.

The anode and cathode in the fuel cell according to the present invention may be discrete components but are preferably provided as integral parts of a single unit as is more fully described in WO 95/16287.

In the fuel cell assembly according to the present invention the plurality of cell units may be connected in bipolar or monopolar configuration as is more fully described by Kordesch and Simader in "Fuel Cells and their Applications". VCH. 1996 at 49-50.

The fuel cell and the fuel cell assembly according to the present invention are connected to an external circuit via the current-collecting means.

Where the fuel cell and fuel cell assembly according to the present invention are in the form of a bipolar construction the current-collecting means are preferably terminal current-collectors, more preferably comprising bipolar plates according to the present invention.

Whereas both the fuel cell assembly according to the present invention and the bipolar plate according to the present invention are typically planar we do not exclude the possibility that they may be cylindrical or tubular.

We do not exclude the possibility that the fuel cell, the fuel cell assembly and the bipolar plate according to the present invention may be used in liquid electrolyte fuel cells such as phosphoric acid and so-called "direct methanol" fuel cells.

The electrocatalytically-active coating of which the bipolar plate according to the present invention is comprised typically comprises, in addition to ruthenium oxide, a metal, metal oxide or mixtures thereof from Group 8 of the Periodic Table of Elements, namely Fe, Co, Ni, Ru, Rh, Pd, Os, Ir and Pt.

Suitable electrocatalytically-active coatings comprising mixtures of ruthenium oxide, non-noble metal oxide and noble metal or oxide thereof are described in our EP-A-0479423.

The electrocatalytically-active coating is preferably ruthenium oxide or mixtures of ruthenium oxide with at least one of PtO, Sb₂O₃, Ta₂O₅, PdO, CeO₂ and Co₃O₄ or preferably a mixture of RuO₂ with at least one of TiO₂, SnO₂, IrO₂.

Where the electrocatalytically-active coating comprises a mixture of ruthenium oxide and another oxide the content of the ruthenium oxide may be in the range up to 100 mol %, and typically 5 - 90 mol %.

The thickness of the electrocatalytically-active coating on the bipolar electrode may be in the range 0.5 - 400 gm⁻², and typically 1 - 90 gm⁻².

We do not exclude the possibility that the electrocatalytically-active coating may comprise an intermediate layer between the substrate and the outer layer. As examples of such intermediate layers may be mentioned inter alia the heat-treated niobium oxide layer and the tantalum layer described in EP-A-052986 and EP-A-0107934 respectively.

Where the coating comprises ruthenium oxide it may comprise a plurality of different layers, for example a layer of RuO₂/TiO₂ and a layer of RuO₂, SnO₂.

Also according to the present invention there is provided a PEM, phosphoric acid or direct methanol fuel cell assembly in accordance with Claim 22 appended hereto.

The substrate of which the bipolar electrode is comprised is typically a metal chosen from Ti. V, Cr. Mn, Fe, Co, Ni, Cu, Zr, Nb, Ag, Pt, Ta, Pb, Al, or alloys thereof, preferably titanium or stainless steel.

However, we do not exclude the possibility that the substrate may be formed from a non-metallic material, for example graphite, carbon-fibre paper, carbon-fibre cloth, Ebonex (RTM), or an organic polymeric material. e.g. carbon-filled polypropylene.

The electrocatalytically-active coatings may be applied to the substrate by, for example, painting of a solution of precursors followed by thermal decomposition, thermal spraying, screen-printing of metal alloy, Physical Vapour Deposition (PVD), Chemical Vapour Deposition (CVD), electroplating, electroless plating or spray pyrolysis.

Application of an electrocatalytically-active coating comprising an outer layer of ruthenium oxide and non-noble metal oxide to a substrate by PVD is more fully described in our WO 95/05499.

Application of an electrocatalytically-active coating comprising an outer layer of ruthenium oxide and non-noble metal oxide to a substrate by thermal spraying is more fully described in our WO 95/05498.

Application of an electrocatalytically-active coating comprising an outer layer of platinum and/or platinum oxide and ruthenium and/or ruthenium oxide by PVD is more fully described in our WO 96/24705.

We do not exclude the possibility that different coatings may be applied to different surfaces of the bipolar plate according to the present invention.

Hydrogen fuel for use in the fuel cell assembly according to the present invention may be obtained from, for example, natural gas or methanol. Oxygen for use in the fuel cell assembly according to the further aspect of the present invention may be obtained from air.

It will be appreciated that in the fuel cell assembly according to the present invention the components thereof may be provided with aligned ports, e.g. slots, to form a manifold to allow flow of fuel gas and oxidant gas from the means to feed such gases to the cell to the anodes and cathodes respectively.

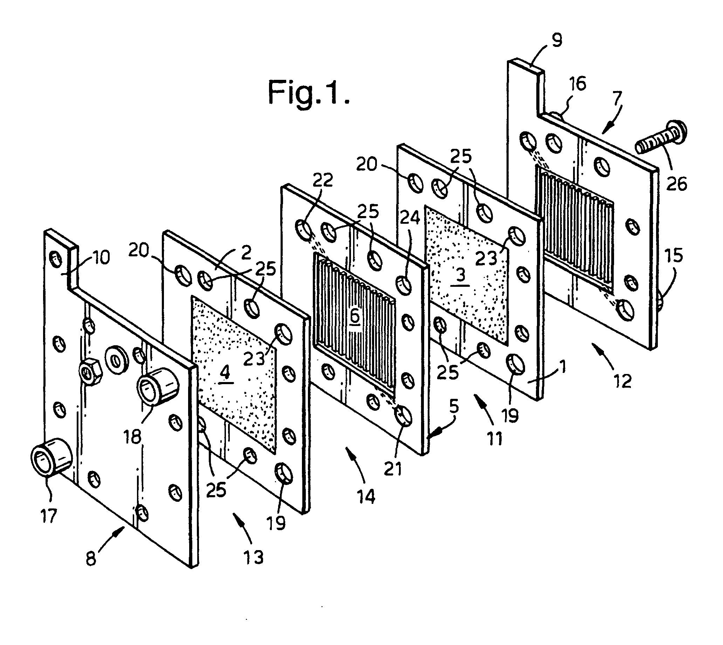

The present invention is illustrated by reference to the accompanying drawing which illustrates, by way of example only, a fuel cell assembly according to the present invention.

In the drawing, ion-permeable membranes (1) and (2) have cathode electrodes (3) and (4) respectively and anode electrodes, not shown, bonded to each of their major surfaces. A bipolar plate (5) according to the present invention, provided with surface features (6), is disposed between ion-permeable membranes (1) and (2) in contact with the electrode surfaces thereof. Terminal plates (7) and (8), provided with leads (9) and (10) for delivering electric current generated in the cell assembly to an external circuit, are disposed adjacent membranes (1) and (2) respectively.

In the assembly, membrane (1) is held firmly between terminal plate (7) and bipolar plate (5) so as to from an oxidant gas chamber (11) and a fuel gas chamber (12). In like manner, membrane (2) is held firmly between terminal plate (8) and bipolar plate (5) so as to from an oxidant gas chamber (13) and a fuel gas chamber (14).

Hydrogen fuel is supplied to the anodes in the fuel gas chambers (12) and (14) via fuel gas inlet conduit (15) and by-products removed via conduit (16).

Oxidant gas is supplied to cathodes (3) and (4) in the oxidant gas chambers (11) and (13) via oxidant gas inlet conduit (17) and by-products removed via conduit (18).

Openings (19) and (20) located in opposite corners of membranes (1) and (2) are aligned with hydrogen gas inlet and outlet conduits (15) and (16) and with openings (21) and (22) in bipolar plate (5) to facilitate passage of hydrogen fuel gas into the fuel chambers (12) and (14) and to remove by-products therefrom.

Openings, not shown, and openings (23) located in opposite corners of membranes (1) and (2) are aligned with oxidant inlet and outlet conduits (17) and (18) and with opening (24) and another not shown in bipolar plate (5) to facilitate passage of oxidant gas into the oxidant chambers (11) and (13) and to remove by-products therefrom.

End plates (7) and (8), membranes (1) and (2) and bipolar plate (5) are each provided with a plurality of openings (25) through which assembly tie-rods or bolts (26) pass.

In a further embodiment of the present invention, a layer of diffusion material which is electrically conducting and porous, for example a carbon-coated paper or a graphite-impregnated polymer film, is disposed in the oxidant gas chambers (11) and (13) and/or in the fuel gas chambers (12) and (14). For example, the layer of diffusion material may be disposed between polar plate (5) and the adjacent electrode surfaces of membranes (1) and (2) and/or between the terminal plates (7) and (8) and the adjacent electrode surfaces of membranes (1) and (2).

The present invention is further illustrated by reference to the following Examples.

### Examples 1 and 2

These Examples illustrate bipolar plates and fuel cells according to the present invention wherein the coating of electrocatalytically-active material comprises ruthenium oxide and titanium oxide.

A coating of composition 47.5 mole % ruthenium and 52.4 mole % titanium was prepared by adding tetra-n-butyl titanate (7.47g) to a solution of ruthenium (2g), as ruthenium trichloride, in pentan-1-ol (31g).

In Example 1, a portion of this solution was applied by brush to a titanium substrate which had been etched in 10% oxalic acid solution at 80-85° C for 8 hours. The coated substrate was dried at 180° C and then baked at 450° C; 12 coats were applied in this manner. Three of the coated plates were operated as bipolar plates in a PEM fuel cell and the cell voltage output thereof was determined at 1 A/cm⁻² and the per-centage voltage efficiency calculated therefrom.

In Example 2 the procedure of Example 1 was repeated except that the substrate was a 316L stainless steel plate which had been grit blasted.

In a Comparative Test, stainless steel plates were operated as bipolar plates in a PEM fuel cell.

The results are shown in the Table from which it can be seen that PEM fuel cells according to the present invention have a voltage efficiency at least 13% better than a PEM fuel cell comprising a known plate.

**TABLE**

| Bipolar plate material | Voltage efficiency % |
|---|---|
| 316L SS | 100 |
| Example 1 | 113 |
| Example 2 | 117 |

### Example 3 (not according to the invention)

This example illustrates bipolar plates wherein the coating of electrocatalytically-active material comprises a nickel/cobalt spinel.

Co(NO₃)₂.6H₂O and Ni(NO₃)₂.6H₂O were dissolved in pentan-1-ol to give a total solute concentration of 0.4M and a Co:Ni ratio of 2:1.

Five coats of this solution were applied by brush to an etched titanium substrate, each coat being dried for 10 mins. at 180° C. After addition of the last coat the plate was annealed at 350° C for 10 hours. The loading of coating, a mixed cobalt/nickel oxide< on the substrate was 2.5g/m².

### Example 4-6

These Examples illustrate bipolar plates according to the present invention wherein the coating of electrocatalytically-active material comprises ruthenium oxide and tin oxide (Examples 4 and 5) and ruthenium oxide, tin oxide and iridium oxide (Example 6).

In these Examples the coating was applied to a stainless steel (SS) substrate by physical vapour deposition (PVD) which is more fully described in our WO 96/24705.

The SS substrates were degreased ultrasonically in Arklone (RTM), then : in Example 4 the stainless steel substrate was not subjected to any further pre-treatment; in Example 5 the stainless steel substrate was pre-treated by grit blasting and etching in 10% oxalic acid solution by making cathodic for up to 10 mins. at 4-5 volts; and in Example 6 the stainless steel substrate was pre-treated by etching in 10% oxalic acid solution by making cathodic for up to 10 mins. at 4-5 volts.

The coatings were applied to the substrates using a Ru/Sn source (Examples 4 and 5) or a Ru/Sri/Ir source as described in our WO 96/24705. The loading of coating on the substrate was 35g/m².

### Example 7 (not according to the invention)

This Example illustrates a bipolar plate wherein the coating of electrocatalytically-active material comprises cerium oxide.

A titanium substrate was etched and the coating was applied thereto by plasma spraying a cerium/nickel powder as is more fully described in our EP 0 546 714, the disclosure in which is incorporated herein by way of reference. The loading of coating on the substrate was 380g/m².

### Example 8

This Example illustrates bipolar plates according to the present invention wherein the coating of electrocatalytically-active material comprises ruthenium and tin .

An etched titanium plate and a platinum electrode were immersed in a solution of ruthenium trichloride (58 g) and stannous trichloride (205 g) in 6M hydrochloric acid (1000 ml). With the titanium plate as cathode an electric current was applied to the solution, equivalent to 0.5 kA/m² for 30 mins. The loading of the Ru/Sn coating on the titanium substrate was 1.5 g/m².

### Example 9-10

These Examples illustrate bipolar plates according to the present invention wherein the coating of electrocatalytically-active material comprises ruthenium oxide and platinum oxide.

In Example 9, the substrate was a titanium plate. In Example 10, the substrate was a stainless steel plate.

Five coats of a solution of RuCl₃ (7.4 g) and H₂PtCl₆ (22.2 g) in a mixture of acetic acid (100 ml) and hydrochloric acid (900 ml) were applied by brush to the substrates. Each coat was dried at 180° C for 10 mins. and then fired at 450° C for 20 mins. After the final coat had been fired the bipolar plate was heated in air for I hour at 450° C. The loading of platinum on the substrates was 1.5 g/m².

### Examples 11-12

These Examples illustrate bipolar plates according to the present invention wherein the substrates are non-metallic.

In these Examples the substrate was Ebonex (RTM). The substrates were cleaned ultrasonically in IPA. air dried and heated at 180° C for 10 mins.

In Example 11, which is not according to the invention, the electrocatalytically-active coating comprised platinum oxide and iridium oxide in weight ratio 70:30 and the loading of the coating was 1.5g/m². The coating was prepared by applying six coats of a solution of H₂IrCl6₃ (11.9 g) and H₂PtCl₆ (32.6 g) in pentanol (1000 ml) by brush to the substrates. Each coat was dried at 180° C for 10 mins. and then fired at 500° C for 20 mins. After the final coat had been fired the bipolar plate was heated in air for 1 hour at 450° C.

In Example 12 the electrocatalytically-active coating comprised ruthenium oxide and titanium oxide in weight ratio 35:65 and the loading of the coating was 20g/m². The coating was prepared as described in Examples 1-2 except that 6 coats of the solution were applied instead of 5 coats.

## Claims

1. A bipolar plate for use in a fuel cell for (a) conducting current from the anode of one cell unit to the cathode of the adjacent cell unit and/or (b) distributing fluid, the plate comprising a substrate with a coating of an electrocatalytically-active material comprising ruthenium oxide.

2. A plate as claimed in Claim 1 in which the electrocatalytically-active material further comprises, in addition to ruthenium oxide, a metal, metal oxide or mixtures thereof selected from Fe, Co, Ni, Rh, Pd, Os, Ir and Pt.

3. A plate as claimed in Claim 1 in which the electrocatalytically-active material further comprises, in addition to ruthenium oxide, a non-noble metal oxide.

4. A plate as claimed in Claim 1 in which the electrocatalytically-active material further comprises, in addition to ruthenium oxide, at least one of PtO, Sb₂O₃, Ta₂O₅, PdO, CeO₂ and Co₃O₄.

5. A plate as claimed in Claim 1 which the electrocatalytically-active material further comprises a mixture of ruthenium oxide with at least one of TiO₂, SnO₂ and IrO₂.

6. A plate as claimed in any one of Claims 1 to 6, the plate being provided with surface features forming gas flow channels which ensure substantially even distribution of fuel gases over the electrode surfaces and facilitate transport of by-products therefrom.

7. A plate as claimed in Claim 6 including openings to allow flow of fuel gas and oxidant gas to the anode and cathode respectively.

8. A plate as claimed in Claim 6 or 7 in which the surface features comprise a series of corrugations.

9. A plate as claimed in Claim 6 or 7 in which the surface features comprise a serpentine pattern.

10. A plate as claimed in any one of Claims 6 to 9, the surface features being formed by embossing or die-casting.

11. A plate as claimed in any one of Claims 1 to 10 in which the substrate is metallic.

12. A plate as claimed in Claim 11 in which the substrate of the plate is a metal chosen from Ti, V, Cr, Mn, Fe, Co, Ni, Cu, Zr, Nb, Ag, Pt, Ta, Pb, Al or alloys thereof.

13. A plate as claimed in Claim 11, the substrate of the plate being of aluminium or an alloy thereof.

14. A plate as claimed in Claim 11, the substrate of the plate being of titanium or an alloy thereof.

15. A plate as claimed in Claim 11, the substrate of the plate being of iron or an alloy thereof.

16. A fuel cell incorporating at least one plate as claimed in any one of Claims 1 to 15.

17. A fuel cell as claimed in Claim 16, being a PEM, phosphoric acid or direct methanol fuel cell.

18. A fuel cell assembly comprising:
a) a plurality of cell units; and
b) at least one plate as claimed in any one of Claims 1 to 15.

19. A fuel cell assembly comprising:
a) a plurality of cell units wherein each unit contains an essentially gas-impermeable proton-exchange membrane separating the cell into anolyte and catholyte chambers and with an anode and a cathode on opposite sides thereof;
b) a bipolar plate disposed between adjacent cell units;
c) current-collecting means;
d) means to feed hydrogen fuel to the anodes; and
e) means to feed an oxygen-containing gas to the cathode,
**characterised in that** each bipolar plate comprises a plate as claimed in any one of Claims 1 to 15.

20. A fuel cell assembly comprising:
a) at least two bipolar plates;
b) a membrane electrode assembly disposed between the plates, which membrane electrode assembly comprises a pair of opposed electrodes with a proton-exchange membrane disposed therebetween with the proviso that where the fuel cell comprises more than two bipolar plates a membrane electrode assembly and a bipolar plate alternate throughout the cell and the membrane electrode assemblies are disposed in the fuel cell such that a anode and a cathode alternate throughout the cell;
c) current-collecting means;
d) means to feed gaseous hydrogen fuel to the anodes; and
e) means to feed an oxygen-containing gas to the cathode,
**characterised in that** each bipolar plate comprises a bipolar plate as claimed in any one Claims I to 16.

21. A PEM, phosphoric acid or direct methanol fuel cell assembly provided with a bipolar plate for (a) conducting current from the anode of one cell unit to the cathode of the adjacent cell unit and/or (b) distributing fluid, the plate comprising a substrate with a coating of an electrocatalytically-active material comprising:
(a) a mixture of ruthenium or its oxide and a metal or oxide of a metal selected from the group of Fe, Co, Ni or Os; or
(b) a mixture of ruthenium and tin.

## Patentansprüche

1. Bipolare Platte für die Verwendung in einer Brennstoffzelle für (a) eine Stromleitung von der Anode der einen Zelleinheit zu der Kathode der benachbarten Zelleinheit und/oder (b) Verteilung der Flüssigkeit, wobei die Platte ein Substrat mit einer Beschichtung eines elektrokatalytisch aktiven Materials enthaltend Rutheniumoxid aufweist.

2. Platte nach Anspruch 1, **dadurch gekennzeichnet, dass** das elektrokatalytisch aktive Material zusätzlich zum Rutheniumoxid weiter ein Metall, Metalloxid oder Mischungen hiervon ausgewählt aus der Gruppe Fe, Co, Ni, Rh, Pd, Os, Ir und Pt enthält.

3. Platte nach Anspruch 1, **dadurch gekennzeichnet, dass** das elektrokatalytisch aktive Material zusätzlich zum Rutheniumoxid ein Metalloxid eines unedlen Metalls enthält.

4. Platte nach Anspruch 1, **dadurch gekennzeichnet, dass** das elektrokatalytisch aktive Material zusätzlich zum Rutheniumoxid mindestens eines von PtO, Sb₂O₃, Ta₂O₅, PdO, CeO₂ und Co₃O₄ enthält.

5. Platte nach Anspruch 1, **dadurch gekennzeichnet, dass** das elektrokatalytisch aktive Material weiter eine Mischung von Rutheniumoxid mit mindestens einem von TiO₂, SnO₂ und IrO₂ enthält.

6. Platte nach einem der Ansprüche 1 bis 6, **dadurch gekennzeichnet, dass** die Platte mit Oberflächenmerkmalen bereitgestellt wird, die Gasflusskanäle ausformen, welche im wesentlichen sicherstellen, dass sogar eine Verteilung der Brenngase über die Elektrodenoberflächen und ein erleichterter Transport von Nebenprodukten hiervon ermöglicht wird.

7. Platte nach Anspruch 6, **dadurch gekennzeichnet, dass** Öffnungen enthalten sind, die den Fluss von Brenngas und Oxidationsmittelgas zu der Anode bzw. Kathode erlauben.

8. Platte nach Anspruch 6 oder 7, **dadurch gekennzeichnet, dass** die Oberflächenmerkmale eine Serie von Riefen umfassen.

9. Platte nach einem der Ansprüche 6 oder 7, **dadurch gekennzeichnet, dass** die Oberflächenmerkmale ein Serpentinen-Muster umfassen.

10. Platte nach einem der Ansprüche 6 bis 9, **dadurch gekennzeichnet, dass** die Oberflächenmerkmale durch Prägung oder Spritzgießen geformt sind.

11. Platte nach einem der Ansprüche 1 bis 10, **dadurch gekennzeichnet, dass** das Substrat metallisch ist.

12. Platte nach Anspruch 11, **dadurch gekennzeichnet, dass** das Substrat der Platte aus einem Metall ausgewählt aus Ti, V, Cr, Mn, Fe, Co, Ni, Cu, Zr, Nb, Ag, Pt, Ta, Pb, Al oder Legierungen hiervon besteht.

13. Platte nach Anspruch 11, **dadurch gekennzeichnet, dass** das Substrat der Platte aus Aluminium oder einer Legierung hiervon besteht.

14. Platte nach Anspruch 11, **dadurch gekennzeichnet, dass** das Substrat der Platte aus Titan oder einer Legierung hiervon besteht.

15. Platte nach Anspruch 11, **dadurch gekennzeichnet, dass** das Substrat der Platte aus Eisen oder einer Legierung hiervon besteht.

16. Brennstoffzelle, in die mindestens eine Platte nach einem der Ansprüche 1 bis 15 integriert ist.

17. Brennstoffzelle nach Anspruch 16, **dadurch gekennzeichnet, dass** die Brennstoffzelle eine PEM, Phosphorsäure- oder direkte Methanol-Brennstoffzelle ist.

18. Brennstoffzellenanordnung enthaltend:
a) eine Vielzahl von Zelleinheiten und
b) mindestens eine Platte nach einem der Ansprüche 1 bis 15.

19. Brennstoffzellenanordnung enthaltend:
a) eine Vielzahl von Zelleinheiten, wobei jede Einheit für Gas eine im Wesentlichen impermeable Protonenaustauschermembran enthält, die die Zelle in Anolyt- und Katholyt-Kammern unterteilt und mit einer Anode und einer Kathode auf gegenüberliegenden Seiten hiervon;
b) eine zwischen benachbarten Zelleinheiten angeordnete bipolare Platte;
c) Mittel zum Stromsammeln;
d) Mittel, um Wasserstoff-Brennstoff in die Anoden einzuspeisen und
e) Mittel, um Sauerstoff enthaltendes Gas in die Kathode einzuspeisen,
**dadurch gekennzeichnet, dass** jede bipolare Platte eine Platte nach einem der Ansprüche 1 bis 15 enthält.

20. Brennstoffzellenanordnung enthaltend:
a) wenigstens zwei bipolare Platten;
b) eine zwischen den Platten angeordnete Membran-Elektroden-Anordnung, wobei die Membran-Elektroden-Anordnung ein Paar sich gegenüberliegender liegender Elektroden mit einer dazwischen angeordneten Protonen-Austausch-Membran enthält, mit der Vorgabe, dass da, wo die Brennstoffzelle mehr als zwei bipolare Platten enthält, eine Membran-Elektroden-Anordnung und eine bipolare Platte über die gesamte Zelle hinweg alternierend und die Membran-Elektroden-Anordnungen in der Brennstoffzelle so angeordnet sind, dass eine Anode und eine Kathode über die ganze Zelle hinweg alternieren;
c) Mittel zum Sammeln des Stroms;
d) Mittel, um gasförmigen Wasserstoff-Brennstoff in die Anoden einzuspeisen und
e) Mittel, um sauerstoffhaltiges Gas in die Kathode einzuspeisen,
**dadurch gekennzeichnet, dass** jede bipolare Platte eine bipolare Platte nach einem der Ansprüche 1 bis 16 enthält.

21. PEM, Phosphorsäure- oder direkte Methanol-Brennstoffzellenanordnung, versehen mit einer bipolaren Platte für (a) eine Stromleitung von der Anode der einen Zelleinheit zu der Kathode der benachbarten Zelleinheit und/oder (b) Verteilung der Flüssigkeit, wobei die Platte ein Substrat mit einer Beschichtung eines elektrokatalytisch aktiven Materials enthält, das
a) eine Mischung von Ruthenium oder dessen Oxid und ein Metall oder Oxide eines Metalls ausgewählt aus der Gruppe von Fe, Co, Ni oder Os oder
b) eine Mischung von Ruthenium und Zinn enthält.

## Revendications

1. Plaque bipolaire destinée à être utilisée dans une pile à combustible pour (a) conduire un courant depuis l'anode d'une unité de pile à la cathode de l'unité de pile adjacente et/ou (b) distribuer un fluide, la plaque comprenant un substrat pourvu d'un revêtement formé d'un matériau actif d'une manière électrocatalytique et comprenant de l'oxyde de ruthénium.

2. Plaque selon la revendication 1, dans laquelle le matériau actif de façon électrocatalytique comporte en outre, en plus de l'oxyde de ruthénium, un métal, un oxyde métallique ou des mélanges de tels matériaux choisis parmi Fe, Co, Ni, Rh, Pd, Os, Ir et Pt.

3. Plaque selon la revendication 1, dans laquelle le matériau actif du point de vue électrocatalytique comporte en outre, en plus de l'oxyde de ruthénium, un oxyde de métal non précieux.

4. Plaque selon la revendication 1, dans laquelle le matériau actif du point de vue catalytique comprend en outre, en plus de l'oxyde de ruthénium, au moins l'un de PtO, Sb₂O₃, Ta₂O₅, PdO, CeO₂ et Co₃O₄.

5. Plaque selon la revendication 1, dans laquelle le matériau actif du point de vue électrocatalytique comporte en outre un mélange d'oxyde de ruthénium avec au moins l'un de TiO₂, SnO₂ et IrO₂ .

6. Plaque selon l'une quelconque des revendications 1 à 6, la plaque étant pourvue de caractéristiques de surface formant des canaux de circulation de gaz, qui garantissent sensiblement une distribution uniforme de gaz combustible sur les surfaces d'électrodes et facilite le transport de produits secondaires à partir de là.

7. Plaque selon la revendication 6, comprenant des ouvertures pour permettre l'écoulement d'un gaz combustible et d'un gaz oxydant respectivement en direction de l'anode et de la cathode.

8. Plaque selon la revendication 6 ou 7, dans laquelle les caractéristiques de surface comprennent une série d'ondulations.

9. Plaque selon la revendication 6 ou 7, dans laquelle les caractéristiques de surface comprennent une configuration en serpentin.

10. Plaque selon l'une quelconque des revendications 6 à 9, dans laquelle les caractéristiques de surface sont formées par emboutissage ou coulée sous pression.

11. Plaque selon l'une quelconque des revendications 1 à 10, dans laquelle le substrat est métallique.

12. Plaque selon la revendication 11, dans laquelle le substrat de la plaque est un métal choisi parmi Ti, V, Cr, Mn, Fe, Co, Ni, Cu, Zr, Nb, Ag, Pt, Ta, Pb, Al ou des alliages de ces derniers.

13. Plaque selon la revendication 11, dans laquelle le substrat de la plaque est en aluminium ou en un alliage d'aluminium.

14. Plaque selon la revendication 11, dans laquelle le substrat de la plaque est en titane ou en un alliage de titane.

15. Plaque selon la revendication 11, dans laquelle le substrat de la plaque est en fer ou en un alliage de fer.

16. Pile à combustible comprenant au moins une plaque selon l'une quelconque des revendications 1 à 15.

17. Pile à combustible selon la revendication 16, qui est une pile à combustible à base de PEM, acide phosphorique ou méthanol direct.

18. Pile à combustible comprenant :
a) une pluralité d'unités de pile; et
b) au moins une plaque selon l'une quelconque des revendications 1 à 15.

19. Ensemble de pile à combustible comprenant :
a) une pluralité d'unités de pile, chaque unité contenant une membrane sensiblement imperméable aux gaz et échangeuse de protons, qui divise la pile en des chambres pour un anolyte et un catholyte et comportant une anode et une cathode situées sur des côtés opposés de cette membrane;
b) une plaque bipolaire disposée entre des unités de pile adjacentes;
c) des moyens de collecte de courant;
d) des moyens pour envoyer un combustible formé d'hydrogène aux anodes; et
e) des moyens pour envoyer un gaz contenant de l'oxygène à la cathode,
**caractérisé en ce que** chaque plaque bipolaire comprend une plaque selon l'une quelconque des revendications 1 à 15.

20. Ensemble de pile à combustible comprenant :
a) au moins deux plaques bipolaires;
b) un ensemble à membrane et électrodes disposé entre les plaques, lequel ensemble à membrane et électrodes comprenant une paire d'électrodes opposées, entre lesquelles est disposée une membrane échangeuse de protons, avec la disposition selon laquelle, lorsque la pile à combustible comprend plus de deux plaques bipolaires, un ensemble à membrane et électrodes et une plaque bipolaire alternent à l'intérieur de la pile et les ensembles à membrane et électrodes sont disposés dans la pile à combustible de telle sorte qu'une anode et une cathode alternent dans la pile;
c) des moyens de collecte de courant;
d) des moyens pour envoyer un combustible formé d'hydrogène gazeux aux anodes; et
e) des moyens pour envoyer un gaz contenant de l'oxygène à la cathode,
**caractérisé en ce que** chaque plaque bipolaire comprend une plaque bipolaire selon l'une quelconque des revendications 1 à 16.

21. Ensemble de pile à combustible PEM, à acide phosphorique ou à méthanol direct, équipé d'une plaque bipolaire pour (a) conduire un courant de l'anode d'une unité de pile à la cathode de l'unité de pile adjacente et/ou (b) distribuer un fluide, la plaque comprenant un substrat possédant un revêtement formé d'un matériau actif du point de vue électrocatalytique, comprenant :
(a) un mélange de ruthénium ou de son oxyde et un métal ou un oxyde d'un métal choisi dans le groupe comprenant Fe, Co, Ni ou Os; ou
(b) un mélange de ruthénium et d'étain.
